# EUROPEAN PATENT APPLICATION

(11) **EP 3 778 747 A1**
(43) Date of publication of application: **17.02.2021**
(21) Application number: 19191843.2
(22) Date of filing: 14.08.2019
(51) Int. Cl.: C08K 5/13, C08K 5/132, C08K 5/3435, C08K 5/3492, C08K 5/42

(54) **UV STABILIZATION OF A CROSS-LINKABLE POLYOLEFIN COMPOSITION COMPRISING AN ACIDIC SILANOL CONDENSATION CATALYST**

(71) Applicant: Borealis AG, 1220 Vienna (AT)
(72) Inventor: Hellström, Stefan, 44486 Stenungsund (SE); Gschneidtner, Tina, 44486 Stenungsund (SE); Nilsson, Susanne, 44486 Stenungsund (SE); Sultan, Bernt-Åke, 44486 Stenungsund (SE); Hermansson, Emma, 44486 Stenungsund (SE)
(74) Representative: Kador & Partner PartG mbB

(57) **Abstract**

The present invention relates to a polyolefin composition comprising a cross-linkable polyolefin with hydrolysable silane groups, an acidic silanol condensation catalyst, wherein the acidic silanol condensation catalyst is present in an amount of 0.0001 to 3 wt.% of the polyolefin composition, at least one UV stabilizer selected from the group consisting of phenols, benzophenones and/or combinations thereof, wherein component (C) is present in an amount of 0.0001 to 0.35 wt.% of the polyolefin composition, and/or at least one UV stabilizer selected from triazines, wherein component (D) is present in an amount of 0.0001 to 2.0 wt.% of the polyolefin composition. The present invention also relates to an article comprising such a composition, and to the use of such a composition for the production of an article.

## Description

The present invention relates to a polyolefin composition comprising a cross-linkable polyolefin with hydrolysable silane groups, an acidic silanol condensation catalyst, at least one UV stabilizer selected from the group consisting of phenols, triazines, benzophenones and/or combinations thereof. The present invention also relates to an article comprising such a composition, and to the use of such a composition for the production of an article.

It is known to cross-link polyolefins by means of additives as this improves the properties of the polyolefin such as mechanical strength and chemical heat resistance. Cross-linking may be performed by condensation of silanol groups contained in the polyolefin which can be obtained by hydrolyzation of silane groups. A silane compound can be introduced as a cross-linkable group e.g. by grafting the silane compound onto a polyolefin, or by copolymerization of olefin monomers and silane group containing monomers. Such techniques are known for example from US 4,413,066, US 4.297,310, US 4,351,876, US 4,397,981, US 4,446,283 and US 4,456,704.

For cross-linking of polyolefins, a silanol condensation catalyst must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature and with no risk to release tin organic compounds to the environment. Such acidic silanol condensation catalysts are disclosed for example in WO 95/17463. The content of this document is enclosed herein by reference.

However, it is known that acidic silanol condensation catalysts react with UV stabilizers typically used in polymer applications in the prior art so that on the one hand protection from damages derived from ultraviolet rays and on the other hand the cure is killed. Therefore, polymer compositions which are cross-linked by acidic silanol condensation catalysts show minor UV resistance and cannot be used for applications where UV resistant formulations are required like installation cables, cable de facade, films and outdoor pipes.

It has been believed in the art that amine containing UV stabilizers such as stabilizers of the HALS (hindered amine light stabilizer) type which have advantageous UV stabilization properties cannot be used in polymer compositions comprising an acidic silanol condensation catalyst as they would interact with the cross-linking components in an acidic environment.

Besides, it was also long believed that triazoles can also not be used in polymer compositions comprising an acidic silanol condensation catalyst.

US 6,337,367 B1 discloses a silane cross-linked insulation material which comprises a substituted benzotriazole as UV stabilizer. However, the cross-linking catalyst is not disclosed.

JP 2003-3192846 A discloses a silane cross-linked polyolefin composition which comprises a benzotriazole derivative as UV stabilizer and a (meth)acrylate-based and/or an allylic cross-linking auxiliary for the use in electric wires.

It has been surprisingly found that the above objects of good cure combined with improved UV resistance in polymer compositions which are cross-linked by acidic silanol condensation catalysts can be achieved by addition of at least one UV stabilizer of the triazine, phenolic, benzophenone type or combinations thereof to a polyolefin composition comprising a cross-linkable polyolefin with hydrolysable silane groups and an acidic silanol condensation catalyst.

In a first aspect the present application therefore relates to a polyolefin composition comprising
(A) a cross-linkable polyolefin with hydrolysable silane groups;
(B) an acidic silanol condensation catalyst,
   wherein the acidic silanol condensation catalyst (B) is present in an amount of 0.0001 to 3 wt.% of the polyolefin composition;
(C) at least one UV stabilizer selected from the group consisting of phenols, benzophenones and/or combinations thereof,
   wherein component (C) is present in an amount of 0.0001 to 0.35 wt.% of the polyolefin composition; and/or
(D) at least one UV stabilizer selected from triazines,
   wherein component (D) is present in an amount of 0.0001 to 2.0 wt.% of the polyolefin composition.

It is preferred that in the inventive polyolefin composition component (C) is selected from a UV stabilizer according to formula (I) 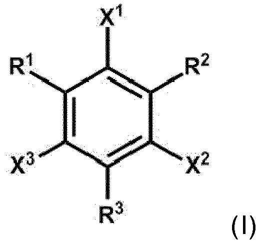 with R¹ and R² being independently the same or different non-substituted or substituted aliphatic or aromatic hydrocarbon residues which independently may comprise hetero atoms; with R³ being any substituent; and with X¹, X², and X³ independently being H or OH, with the proviso that at least one of X¹, X² and X³ is OH; and/or
according to formula (II) 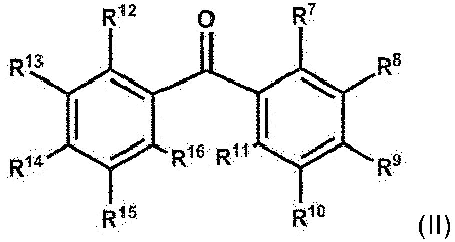 with R⁷ to R¹⁶ being any substituent, preferably R⁷ to R¹⁶ being independently the same or different hetero atoms, substituted or non-substituted hydrocarbon residues, which may comprise hetero atoms, or hydrogen atoms with the proviso that at least one of R⁷ to R¹⁶ is OH, more preferably R⁷ to R¹⁶ being independently the same or different hetero atoms, substituted or non-substituted hydrocarbon residues, which may comprise hetero atoms, or hydrogen atoms with the proviso that at least one of R⁷ to R¹¹ is OH; and/or
wherein component (D) is selected from a UV stabilizer according to formula (III) 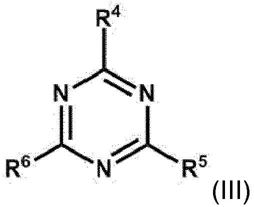 with R⁴ and R⁵ being independently the same or different non-substituted or substituted aliphatic or aromatic hydrocarbon residues which independently may comprise hetero atoms with the proviso that the hetero atoms of at least one of R⁴ and R⁵ are selected from the group consisting of O, P, S, F, CI, Br and/or I; and with R⁶ being any substituent.

In a preferred embodiment the polyolefin composition further comprises component (E) according to formula (IV) 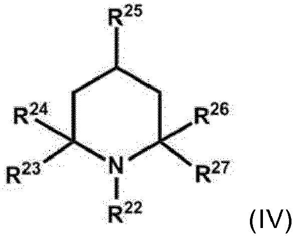 with R²² and R²⁵ being any substituent, and R²³, R²⁴, R²⁶ and R²⁷ being independently the same or different hydrocarbon residues, preferably R²² is a hydrogen atom or an alkoxy residue; wherein component (E) is present in an amount of 0.0001 to 0.1 wt.% of the polyolefin composition.

Component (E) is a hindered amine light stabilizer (HALS). Hindered amine light stabilizers (HALS) according to the invention are chemical compounds containing an amine functional group. These compounds are used as stabilizers in polymers. Typically compounds of the HALS type are derivatives of tetramethylpiperidine and these compounds are used to protect the polymers from the effects of photo-oxidation.

Preferably component (C) is present in an amount of 0.001 to 0.35 wt.%, preferably 0.01 to 0.30 wt.% and more preferably of 0.1 to 0.30 wt.% of the polyolefin composition.

Preferably component (D) is present in an amount of 0.001 to 2.0 wt.%, preferably 0.01 to 1.5 wt.% and more preferably of 0.1 to 1.0 wt.% of the polyolefin composition.

In a preferred embodiment component (C) is present in an amount of 0.001 to 0.35 wt.%, preferably 0.01 to 0.30 wt.% and more preferably of 0.1 to 0.30 wt.% of the polyolefin composition, and/or component (D) is present in an amount of 0.001 to 2.0 wt.%, preferably 0.01 to 1.5 wt.% and more preferably of 0.1 to 1.0 wt.% of the polyolefin composition.

Preferably component (E) is present in an amount of 0.0005 to 0.08 wt.%, preferably 0.001 to 0.06 wt.% and more preferably of 0.005 to 0.04 wt.% of the polyolefin composition.

It has been found that in the polyolefin composition of the present invention at least one UV stabilizer (C) and/or at least one UV stabilizer (D) does not spoil the reactivity of the acidic silanol condensation catalyst. Therefore, products comprising the composition show good protection from UV light combined with good cross-linking properties.

Preferably R¹, R² and/or R³ in formula (I) of the at least one UV stabilizer (C) further comprise at least one aryl group which may be substituted or non-substituted.

Furthermore, R¹, R²and/or R³ in formula (I) preferably further comprise at least 1 carbon atom, more preferably at least 2 carbon atoms and even more preferably at least 4 carbon atoms.

The at least one UV stabilizer (C) according to formula (I) may comprise the structural unit according to formula (I) one or several times, for example two or three times. For example, two structural units according to formula (I) may be linked to each other via a bridging group.

Preferred components according to formula (I) are selected from the group consisting of 3,5-(1,1-dimethylethyl)-2,4-bis (1,1-dimethyethyl) phenyl ester (CAS 4221-80-1), 3,5-di-t-butyl-4-hydroxybenzoic acid, hexadecyl ester (CAS 67845-93-6), *n*-hexadecyl-3,5-di-*t*-butyl-4-hydroxybenzoate (CAS 67845-93-6) and/or combinations thereof, and more preferably selected from the group consisting of 3,5-(1,1-dimethylethyl)-2,4-bis (1,1-dimethyethyl) phenyl ester (CAS 4221-80-1), *n-*hexadecyl*-* 3,5-di-*t*-butyl-4-hydroxybenzoate (CAS 67845-93-6) and/or combinations thereof.

Preferably R⁷ to R¹⁶ in formula (II) of the at least one UV stabilizer (C) further comprise at least one aryl group which may be substituted or non-substituted.

Furthermore, at least one of R⁷ to R¹⁶ in formula (II) preferably further comprises at least 6 carbon atoms, more preferably at least 7 carbon atoms and even more preferably at least 8 carbon atoms.

At least one of R⁷ to R¹¹ preferably further comprises at least 6 carbon atoms, more preferably at least 7 carbon atoms and even more preferably at least 8 carbon atoms.

Furthermore, at least one of R¹² to R¹⁶ preferably is a hydrogen atom, more preferably at least two of R¹² to R¹⁶ are hydrogen atoms, even more preferably R¹² to R¹⁶ are all hydrogen atoms.

The at least one UV stabilizer (C) according to formula (II) may comprise the structural unit according to formula (II) one or several times, for example two or three times. For example, two structural units according to formula (II) may be linked to each other via a bridging group.

Preferred components according to formula (II) are selected from the group consisting of 2-hydroxy-4-n-octoxy-benzophenone (CAS 1843-05-6), poly[2-hydroxy-4-(acryloyloxyethoxy)benzophenone] (CAS 29963-76-6) and/or combinations thereof.

Preferably R⁴, R⁵ and/or R⁶ in formula (III) of the at least one UV stabilizer (D) further comprise at least one aryl group which may be substituted or non-substituted.

Furthermore, R⁴, R⁵ and/or R⁶ in formula (III) preferably further comprise at least 6 carbon atoms, more preferably at least 7 carbon atoms and even more preferably at least 8 carbon atoms.

The at least one UV stabilizer (D) according to formula (III) may comprise the structural unit according to formula (III) one or several times, for example two or three times. For example, two structural units according to formula (III) may be linked to each other via a bridging group.

Preferred components according to formula (III) are selected from the group consisting of 2-(4,6-diphenyl-1,3,5-triazin-2-yl)-5-((hexyl)oxy)-phenol (CAS 147315-50-2), (2-[4,6-bis(2,4-dimethylphenyl)-1,3,5-triazin-2-yl]-5-(octyloxy) phenol (CAS 2725-22-6) and/or combinations thereof.

In formula (IV) of component (E) preferably R²³, R²⁴, R²⁶ and R²⁷ represent methyl.

Preferably R²² is a hydrogen atom, a hydrocarbon or an alkoxy residue, more preferably R²² is a hydrogen atom or R²² is -O-R²⁸ with R²⁸ being a hydrocarbon. Even more preferably R²³, R²⁴, R²⁶ and R²⁷ represent methyl and R²² is a hydrogen atom or R²² is -O-R²⁸ with R²⁸ being a hydrocarbon.

The currently most preferred components of formula (IV) is Bis(1-undecanoxy-2,2,6,6-tetramethylpiperidin-4-yl)-carbonate (CAS 705257-84-7), (poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino))) (CAS 71878-19-8), Flamestab NOR 116 (BASF SE, CAS 191680-81-6), Hostavin NOW (Clariant, CAS 09003-07-0), (dimethyl succinate polymer with 4-hydroxy-2,2,6,6-tetramethyl-1-piperidine ethanol) (CAS 65447-77-0), (bis-(2,2,6,6-tetramethyl-4-piperidyl)-sebacate (CAS 52829-07-9), (1,6-hexanediamine, N,N'-bis(2,2,6,6-tetramethyl-4-piperidinyl)-, polymer with 2,4,6-trichloro-1,3,5-triazine, reaction product with, N-butyl-1-butanamine and N-butyl-2,2,6,6-tetramethyl-4-piperidinamine (CAS 192268-64-7), (1,3,5-triazine-2,4,6-triamine, *N,N*"'-(1,2-ethane-diylbis(((4,6-bis(butyl(1,2,2,6,6-pentamethyl-4-piperidinyl)amino)-1,3,5-triazine-2-yl) imino)-3,1-propanediyl))-bis-(*N',N"*-dibutyl-*N',N"*-bis-(1,2,2,6,6-pentamethyl-4-piperidinyl) (CAS 106990-43-6), and/or combinations thereof.

The composition of all aspects of the present invention comprises a cross-linkable polyolefin containing hydrolysable silane groups (A).

Preferably the cross-linkable polyolefin (A) comprises, more preferably consists of, a polyethylene containing hydrolysable silane groups.

The hydrolysable silane groups may be introduced into the polyolefin by copolymerization of for example ethylene monomers with silane group containing comonomers or by grafting, i.e. by chemical modification of the polymer by addition of silane groups mostly in a radical reaction. Both techniques are well known in the art.

Preferably the silane group containing polyolefin has been obtained by copolymerization or by grafting, more preferably by copolymerization.

In the case of polyolefins, preferably polyethylene, the copolymerization is preferably carried out with an unsaturated silane compound represented by the formula

R²⁹SiR³⁰_{q}Y_{3-q} (V)

wherein R²⁹ is an ethylenically unsaturated hydrocarbyl, hydrocarbyloxy or (meth)acryloxy hydrocarbyl group,
R³⁰ is an aliphatic saturated hydrocarbyl group,
Y which may be the same or different, is a hydrolysable organic group and q is 0, 1 or 2.

Examples of the unsaturated silane compound are those wherein R²⁹ is vinyl, allyl, isopropenyl, butenyl, cyclohexanyl or gamma-(meth)acryloxy propyl; Y is methoxy, ethoxy, formyloxy, acetoxy, propionyloxy or an alkyl- or arylamino group; and R³⁰, if present, is a methyl, ethyl, propyl, decyl or phenyl group.

A preferred unsaturated silane compound is represented by the formula (VI)

CH₂=CHSi(OA)₃ (VI)

wherein A is a hydrocarbyl group having 1-8 carbon atoms, preferably 1-4 carbon atoms.

More preferred compounds are vinyl trimethoxysilane, vinyl bismethoxyethoxysilane, vinyl triethoxysilane, gamma-(meth)acryl-oxypropyl-trimethoxysilane, gamma(meth)acryloxypropyl triethoxysilane, and vinyl triacetoxysilane, or combinations of two or more thereof.

The copolymerization of the olefin, for example ethylene, and the unsaturated silane compound may be carried out under any suitable conditions resulting in the copolymerization of the two monomers.

Preferably in the cross-linkable polyolefin with hydrolysable silane groups (A) the silane groups are present in an amount of 0.001 wt.% or more, more preferably 0.01 wt.% or more, and even more preferably 0.1 wt.% or more of component (A).

Preferably in the cross-linkable polyolefin with hydrolysable silane groups (A) the silane groups are present in an amount of 15 wt.% or less, more preferably 5 wt.% or less, and even more preferably 3 wt.% or less of component (A).

Preferably in the cross-linkable polyolefin with hydrolysable silane groups (A) the silane groups are present in an amount of 0.001 to 15 wt.%, more preferably 0.01 to 5 wt.%, even more preferably 0.1 to 3 wt.% and most preferably 0.4 to 2.4 wt.% of component (A).

Preferably the polyolefin composition has an MFR₂ (190°C, 2.16 kg) of 0.1 to 200 g/10min, more preferably of 0.3 to 50 g/10min and most preferably of 0.5 to 10 g/10min, and/or a density of 850 to 960 kg/m³, more preferably of 860 to 945 kg/m³ and most preferably of 880 of 935 kg/m³.

In a preferred embodiment the polyolefin composition comprises a polyolefin with monomer units with polar groups.

Preferably the polar groups are selected from siloxane, amide, anhydride, carboxylic, carbonyl, hydroxyl, ester and epoxy groups.

The polar groups may for example be introduced into the polymer by grafting of an ethylene polymer with a polar-group containing compound, i.e. by chemical modification of the polyolefin by addition of a polar group containing compound mostly in a radical reaction. Grafting is for example described in US 3,646,155 and US 4,117,195.

It is further preferred that said polar groups are introduced into the polymer by copolymerization of olefinic, including ethylene, monomers with comonomers bearing polar groups.

As examples of comonomers having polar groups may be mentioned the following: (a) vinyl carboxylate esters, such as vinyl acetate and vinyl pivalate, (b) (meth)acrylates, such as methyl(meth)acrylate, ethyl(meth)acrylate, butyl(meth)acrylate and hydroxyethyl(meth)acrylate, (c) olefinically unsaturated carboxylic acids, such as (meth)acrylic acid, maleic acid and fumaric acid, (d) (meth)acrylic acid derivatives, such as (meth)acrylonitrile and (meth)acrylic amide, and (e) vinyl ethers, such as vinyl methyl ether and vinyl phenyl ether.

Amongst these comonomers, vinyl esters of monocarboxylic acids having 1 to 4 carbon atoms, such as vinyl acetate, and (meth)acrylates of alcohols having 1 to 4 carbon atoms, such as methyl (meth)acrylate, are preferred. Especially preferred comonomers are butyl acrylate, ethyl acrylate and methyl acrylate. Two or more such olefinically unsaturated compounds may be used in combination. The term "(meth)acrylic acid" is intended to embrace both acrylic acid and methacrylic acid.

Preferably, the polar group containing monomer units are selected from the group of acrylates and/or acetates.

The amount of polar group containing monomer units in the polyolefin preferably is 40 wt.% or less, more preferably 35 wt.% or less, and still more preferably is 25 wt.% or less.

Preferably in the polyolefin with polar groups the monomer units with polar groups are present in an amount of 0.1 to 40 wt.%, preferably 1.0 to 35 wt.%, more preferably 2.0 to 25 wt.% and even more preferably 3.0 to 20 wt.%.

Furthermore, preferably the polar group containing monomer units are present in the polyolefin with polar groups in an amount of from 2.5 to 15 mol%, more preferably 3 to 10 mol%, and most preferably 3.5 to 6 mol%.

In another preferred embodiment, the cross-linkable polyolefin with hydrolysable silane groups (A) at the same time also contains polar groups in any of the embodiments as described hereinbefore.

Preferably the cross-linkable polyolefin with hydrolysable silane groups (A) is a terpolymer also containing monomer units with polar groups, i.e. the cross-linkable polyolefin with hydrolysable silane groups (A) contains both, silane groups and polar groups.

Furthermore, also the preferred amounts for the silane group and the polar group containing monomers as described above apply for the terpolymer.

Such terpolymers may be produced by grafting or by copolymerization of olefin monomers and unsaturated monomers containing silane groups and polar groups.

According to a preferred embodiment the terpolymer is produced by copolymerization of olefin monomers and unsaturated monomers containing silane groups and polar groups.

According to another preferred embodiment the terpolymer is produced by grafting silane compounds and/or polar groups containing compounds onto the polyolefin.

Preferably the monomer units with polar groups comprise monomer units with acrylate and/or acetate units.

If such a terpolymer containing both the silane groups and the polar groups is used in the composition of the invention, it is preferred that it makes up at least 10 wt.%, more preferably at least 50 wt.%, and even more preferably at least 80 wt.% of the total polyolefin composition.

Further preferred the terpolymer containing both the silane groups and the polar groups is used in the composition of the invention, in an amount of 80 to 99.5 wt.%, more preferably of 85 to 99 wt.%, and even more preferably of 90 of 98 wt.% of the total polyolefin composition.

For cross-linking of such polyolefins, a silanol condensation catalyst must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature. Such acidic silanol condensation catalysts are disclosed for example in WO 95/17463. The content of this document is enclosed herein by reference.

Examples for acidic silanol condensation catalysts comprise Lewis acids, inorganic acids such as sulfuric acid and hydrochloric acid, and organic acids such as citric acid, stearic acid, acetic acid, sulfonic acid and alkanoic acids such as dodecanoic acid.

Preferred examples for an acidic silanol condensation catalyst are sulfonic acid and tin organic compounds.

It is preferred that the acidic silanol condensation catalyst comprises a sulfonic acid, preferably comprises an organic sulfonic acid.

It is further preferred that the acidic silanol condensation catalyst comprises a sulfonic acid compound according to formula (VII):

Ar(SO₃H)ₓ (VII)

or a precursor thereof, Ar being an aryl group with one or several aromatic rings, preferably 1 to 3 aromatic rings, more preferably 1 to 2 aromatic rings which may be substituted or non-substituted, and x being at least 1.

The acidic silanol condensation catalyst may comprise the structural unit according to formula (VII) one or several times, for example two or three times. For example, two structural units according to formula (VII) may be linked to each other via a bridging group such as an alkylene group.

Preferably, the Ar group is an aryl group which is substituted with at least one C₁ to C₃₀-hydrocarbyl group, more preferably C₄ to C₃₀-alkyl group.

Furthermore, preferably the compound used as organic aromatic sulfonic acid silanol condensation catalyst has from 10 to 200 carbon atoms, more preferably from 14 to 100 carbon atoms.

According to a preferred embodiment acidic silanol condensation catalyst (B) comprises an organic sulfonic acid comprising 10 to 200 carbon atoms, preferably 14 to 100 carbon atoms, and the sulfonic acid further comprises at least one aromatic group.

It is further preferred that the hydrocarbyl group is an alkyl substituent having 10 to 18 carbon atoms and even more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

The currently most preferred compounds of formula (VII) are dodecyl benzene sulfonic acid, tetrapropyl benzene sulfonic acid, Nacure® CD-2180 from King Industries, which is a highly hydrophobic mixture of C₁₂-alkylated naphthyl sulfonic acids, having an active content of 80%, and/or combinations thereof.

The acidic silanol condensation catalyst may also be a precursor of a compound of formula (VII), i.e. a compound that is converted by hydrolysis to a compound of formula (VII). Such a precursor is for example the acid anhydride of the sulfonic acid compound of formula (VII). Another example is a sulfonic acid of formula (VII) that has been provided with a hydrolysable protective group as for example an acetyl group which can be removed by hydrolysis to give the sulfonic acid of formula (VIII). The acidic silanol condensation catalyst is preferably used in an amount from 0.0001 to 3 wt.%.

The preferred amount of acidic silanol condensation catalyst is from 0.001 to 2 wt.% and more preferably 0.005 to 1 wt.% based on the amount of acidic silanol groups containing polyolefin in the polyolefin composition.

According to a preferred embodiment of the inventive polyolefin composition the acidic silanol condensation catalyst (B) is present in an amount of 0.001 to 2 wt.% and preferably 0.005 to 1 wt.% of the total polyolefin composition.

According to a further preferred embodiment of the inventive polyolefin composition the acidic silanol condensation catalyst (B) comprises an organic sulfonic acid with the structural element:

Ar(SO₃H)ₓ (VII)

with Ar being an aryl group which may be substituted or non-substituted and x being at least 1, and the acidic silanol condensation catalyst (B) is present in an amount of 0.001 to 2 wt.% and preferably 0.005 to 1 wt.% of the total polyolefin composition.

The effective amount of catalyst depends on the molecular weight of the catalyst used. Thus, a smaller amount is required of a catalyst having a low molecular weight than a catalyst having a high molecular weight.

The polyolefin composition according to the invention may further contain various additives, such as miscible thermoplastics, antioxidants, further stabilizers for example water tree retardants, scorch retardants, lubricants, fillers, coloring agents and foaming agents.

The total amount of additives is generally 0.3 to 10.0 wt.%, preferably 1.0 to 7.0 wt.%, more preferably 1.0 to 5.0 wt.% of the total polyolefin composition.

As antioxidant, preferably a compound, or a mixture of such compounds, is used which is neutral or acidic, must comprise a sterically hindered phenol group or aliphatic sulfur groups. Such compounds are disclosed in EP 1 254 923 to be particularly suitable antioxidants for stabilization of polyolefins containing hydrolysable silane groups which are crosslinked with a silanol condensation catalyst, in particular an acidic silanol condensation catalyst. Other preferred antioxidants are disclosed in WO 2005/003199A1.

Preferably, the antioxidant is present in the polyolefin composition in an amount of from 0.01 to 3.0 wt.%, more preferably 0.05 to 2.0 wt.%, and most preferably 0.08 to 1.5 wt.% of the total polyolefin composition.

As filler, preferably carbon black in an amount of 3.0 wt.% or less, preferably 2.5 wt.% or less, most preferably 2.0 wt.% or less of the total polyolefin composition is used.

As coloring agent, all coloring agents apart from carbon black suitable for cable or pipe applications are used.

The at least one UV stabilizer (C), the at least one UV stabilizer (D) and/or component (E) and optionally further additives may be compounded with the silane group containing polyolefin. Alternatively, the at least one UV stabilizer (C) and/or the at least one UV stabilizer (D) and optionally further additives may be compounded with the silane group containing polyolefin. Component (E) is added later to the silane group containing polyolefin containing the at least one UV stabilizer (C) and/or the at least one UV stabilizer (D) and the optional further additives or is compounded in a separate compounding step with the silane group containing polyolefin containing the at least one UV stabilizer (C) and/or the at least one UV stabilizer (D) and the optional further additives.

However, the at least one UV stabilizer (C) and/or the at least one UV stabilizer (D) and/or component (E) are usually added together with the acidic silanol condensation catalyst (B) to the silane group containing polyolefin by compounding the polymer with a so-called master batch, in which the catalyst, usually the at least one UV stabilizer (C) and/or the at least one UV stabilizer (D) and/or component (E), and optionally further additives are contained in a polymer, for example polyolefin, matrix in concentrated form.

Accordingly, the present invention also pertains to a master batch for a cross-linkable polyolefin composition comprising a matrix polymer and an acidic silanol condensation catalyst (B) in any of the above described embodiments.

The matrix polymer is preferably a polyolefin, more preferably a polyethylene, which may be a homo- or copolymer of ethylene, for example low density polyethylene, or polyethylene-methyl-, -ethyl, or -butyl-acrylate copolymer containing 1 to 50 wt.% of the acrylate, and mixtures thereof.

As stated, in the master batch the compounds to be added to the silane group containing polyolefin and the at least one UV stabilizer (C) and/or the at least one UV stabilizer (D) and/or component (E) are contained in concentrated form, i.e. in a much higher amount than in the final composition.

The master batch preferably comprises component (B) in an amount of from 0.3 to 15 wt.%, more preferably from 0.7 to 10 wt.%.

Furthermore, preferably the master batch also contains some or all of the other additives as described above, for example the stabilizers.

It is preferred that the amount of the stabilizers contained in the master batch is up to 20 wt.%. Preferably the amount of stabilizers contained in the master batch is between 0.1 to 20 wt.%.

The master batch preferably is compounded with the silane group containing polymer and the at least one UV stabilizer (C) and/or the at least one UV stabilizer (D) and/or component (E) in an amount of from 1 to 10 wt.%, more preferably from 2 to 8 wt.%.

Compounding may be performed by any known compounding process, including extruding the final product with a screw extruder or a kneader.

The polyolefin compositions according to all aspects of the present invention preferably show improved UV resistance as can be seen in a retention of more than 5 %, more preferably more than 15 %, even more preferably more than 20 % and still even more preferably more than 25% of the elongation at break after 350 h in SEPAP UV exposure.

According to a further aspect the present invention relates to an article comprising the polyolefin composition in any of the above described embodiments.

In a preferred embodiment the article refers to a wire or cable or a pipe or a film preferably used or stored outdoors.

It is preferred that the article refers to a colored cable, a colored pipe or a film, more preferably the article refers to a colored cable.

In a specific embodiment, the article refers to a natural colored cable or colored film, which includes cables or films colored by any of the pigments or pigment master batches intended to be used with polyolefins as a coloring agent.

In a preferred embodiment, the invention relates to a medium or high voltage cable comprising one or more conductors in a cable core, an inner semiconducting layer, followed by an insulating layer, and then an outer semiconducting layer, and an outer protective jacket wherein at least one of these layers is a track-resistant layer and/or wherein at least one of these layers, preferably the outer layer or the insulating layer when the outer layers are pealed off, comprises the polyolefin composition as described above.

In another preferred embodiment the high or medium voltage cable may also comprise one or more conductors in a cable core, an inner semiconducting layer, an insulating layer and/or an outer protective jacket, wherein at least one of these layers is a track-resistant layer and/or wherein at least one of these layers comprises the polyolefin composition as described above.

Preferably the medium or high voltage cable is an overhead cable.

Preferably the overhead cable comprises one or more conductors in a cable core, an inner semiconducting layer and an insulating layer jacket wherein at least one of these layers comprises the polyolefin composition as described above.

Insulating layers for medium or high voltage power cables generally have a thickness of at least 0.5 mm, typically at least 1.0 mm, and the thickness increases with increasing voltage the cable is designed for.

Preferably, the insulating layer has a thickness of at least 2 mm, more preferably at least 4 mm whereby the thickness of the insulating layer is not more than 15 mm, preferably not more than 10 mm.

Preferably the insulating layer has a thickness between 1 to 10 mm and more preferably between 2 to 4 mm.

In addition to the semiconductive and insulating layers, further layers may be present in medium or high voltage cables, such as a metallic tape or wire shield, and, finally, an outermost jacketing layer.

In a further preferred embodiment, the invention relates to a low voltage cable comprising one or more conductors in a cable core followed by an insulating layer and an outer protective jacket wherein at least one of these layers, preferably the outer layer or the insulating layer when the outer layers are pealed off, comprises the polyolefin composition as described above.

In another preferred embodiment the invention relates to a low voltage cable or wire comprising an insulating layer wherein the insulating layer comprises the polyolefin composition as described above.

Preferably the low voltage cable is an overhead cable.

Preferably the overhead low voltage cable comprises one or more conductors in a cable core, an insulating layer and/or an outer protective jacket wherein at least one of these layers comprises the polyolefin composition as described above. The insulating layer may also be a track-resistant insulating layer.

Further preferred the overhead low voltage cable comprises one or more conductors in a cable core, an insulating layer and/or a protective layer wherein at least one of the layers, preferably the insulating layer comprises the polyolefin composition as described above and/or at least one of the layers is a track-resistant layer.

Preferably, the insulating layer of the low voltage cable or wire has a thickness of 0.1 to 5 mm, more preferably at more preferably of 0.25 to 4 mm, even more preferably of 0.4 to 3 mm and most preferably of 0.5 to 2.3 mm.

Usually, the cable is produced by co-extrusion of the different layers onto the conducting core. Then, cross-linking is performed by moisture curing, wherein in the presence of the acidic silanol condensation catalyst the silane groups are hydrolyzed under the influence of water or steam, resulting in the splitting off of alcohol and the formation of silanol groups, which are then cross-linked in a condensation reaction wherein water is split off.

Moisture curing may be performed in a sauna or water bath at temperatures of 70 to 100°C.

In a preferred embodiment of the present invention the curing is performed at a temperature of 5 to 50 °C, more preferably of 10 to 40 °C and a humidity below 85 %, more preferably below 75 %.

In another aspect the invention relates to the use of the polyolefin composition in any of the above described embodiments for the production of an article, preferably of a film or a layer of a wire or cable, more preferably a low, medium or high voltage overhead cable.

Also preferred the polyolefin composition according to in any of the above described embodiments is used for the production of an insulating layer of a low voltage wire, a low voltage building wire or a low voltage cable and/or a layer of a low, medium or high voltage overhead cable.

In a preferred embodiment the invention relates to the use of the polyolefin composition in any of the above described embodiments for the production of a layer of low voltage cables, more preferably of a jacketing layer for outdoor low voltage cables and of an insulation layer for indoor low voltage cables.

In another preferred embodiment the invention relates furthermore to the use of the polyolefin composition in any of the above described embodiments for the production of a layer of a cable, preferably of a track resistant cable mounted in power lines.

The following examples serve to further illustrate the present invention. The invention is not limited to the examples.

### Examples

### 1. Measurement Methods

### a) Melt Flow Rate

The melt flow rate (MFR) is determined according to ISO 1133 and is indicated in g/10 min. The MFR is an indication of the flowability, and hence the processability of the polymer. The higher the melt flow rate, the lower the viscosity of the polymer.

The MFR₂ of polyethylene (co-)polymers is measured at a temperature of 190°C and at a load of 2.16 kg.

### b) Density

Density of the polymer was measured according to ISO 1183-1:2004 Method A on compression moulded specimen prepared according to EN ISO 1872-2 and is given in kg/m³.

### c) Elongation at break / Tensile elongation at break after exposure in SEPAP oven

The tensile elongation at break was measured in accordance with ISO 527-1: 2012 at 23°C and 50% relative humidity on an Alwetron TCT 10 tensile tester at a speed of 250 mm/min. The extensometer used was MFE-900. The test specimens were extruded tapes with a thickness of 1.8 mm. The specimens were conditioned for minimum 16 hours at 23°C +/-2°C and 50% relative humidity prior testing. The average value out of 6 to 10 samples is reported herein.

### d) Hot set elongation test

Tape samples as prepared below in experimental part were used to determine the hot set properties. Three dumb-bells sample, taken out along extrusion direction were prepared according to ISO 527 5A from the 1.8mm +/- 0.1 mm thick crosslinked tape. The hot set tests were made according to EN 60811-2-1 (hot set test) by measuring the thermal deformation.

Reference lines, were marked 20 mm apart on the dumb-bells. Each test sample was fixed vertically from upper end thereof in the oven and the load of 0.2 MPa are attached to the lower end of each test sample. After 15 min, 200°C in oven the distance between the pre-marked lines were measured and the percentage hot set elongation calculated, elongation %. For permanent set %, the tensile force (weight) was removed from the test samples and after recovered in 200°C for 5 minutes and then let to cool in room temperature to room temperature. The permanent set % was calculated from the distance between the marked lines. The average of the three tests was reported.

### e) Crosslinking

Prior to hot set test and exposure in the Sepap oven, the 1.8 m thick tapes were put into a water bath at 90°C for 24 hours.

### 2. Compositions

### a) Materials

Tinuvin® 120, Tinuvin® 622, Chimassorb® 944 and Flamestab® NOR 116 are distributed by BASF SE.

Cyasorb® 531 and Cyasorb® UV-1164 are distributed by Cytec (Solvay Group).

### b) Master batches

A master batch for Comparative example 1 (CE1) was produced comprising:
- a matrix resin: an ethylene butylacrylate copolymer with 17 wt.% butylacrylate, a density of 926 kg/m³ and a MFR₂ of 4.5 g/10 min;
- an acidic silanol condensation catalyst: dodecylbenzenesulfonic acid (DBSA)
- a silane containing compound: hexadecyltrimethoxysilane (HDTMS)
- an antioxidant: lonol® LC distributed by Degussa (CAS 68610-51-5)
- an antiblocking agent: Hoechstwax E (CAS 73138-45-1)

The components were used in the master batches of all examples in the amounts as indicated in Table 1 (data given in wt.%). Compounding of the master batches at 180°C were performed using a Brabender kneader (small chamber, 47 cm³). The master batches were grinded in a cryo mill to a suitable size for the mixing with the silane-ethylene copolymer prior to tape extrusion. Dog bones were made from tape, 1.8 mm thick.

For the other examples master batches were produced using the same principle and using the same ingredients as for CE1, with the exception that the matrix polymer was reduced to balance the further addition of UV additives.

**Table 1**

| | Master batch |
|---|---|
| Matrix | 86.5 |
| DBSA | 1.5 |
| HDTMS | 3.0 |
| Antioxidant | 8.0 |
| Antiblocking agent | 1.0 |

### c) Compositions

The different master batches were dry blended in an amount of 5 wt.% with 94.6 wt.% of a silane group containing polyethylene having a density of 923 kg/m³, a MFR₂ of 1 g/10 min and a silane copolymer content of 1.1 wt.% The dry blends were then extruded to 1.8 mm thick tapes in a Collin TeachLine E20T tape extruder with a 4.2:1, 20D Compression screw, D=20 mm at a temperature profile of 135/145/155°C and with a screw speed of 30 rpm.

For ageing the samples a SEPAP oven was used, as described in NF C32-062-2 (The Effect of UV Light and Weather on Plastics and Elastomers, Laurence W. McKeen, 4th edition, 2019, Elsevier, p. 38).

The SEPAP oven used a mercury arc generating a radiation between 200 - 400 nm, with peaks at 254nm, 310nm and 366 nm. The oven operated under a temperature of 60°C +/- 2°C making it a harsh UV test. The samples were aged for 350h.

### 3. Results

Elongation at break was measured before ageing and after ageing for 350h according to above mentioned test methods.

Hot set was measured according to the above mentioned test method.

The results of the hot set and the elongation at break measurements are given in Table 2.

As can be derived from IE1 to IE3 in Table 2 the addition of UV stabilizers according to components (C) and (D) improves the UV stability of the polyolefin composition when compared with CE 1. Besides, cross-linking of the polyolefin composition is not negatively influenced when using UV stabilizers according to IE1 to IE3 when an acidic silanol condensation catalyst is used. Using a UV stabilizer of the HALS type such as Tinuvin 622 (CE2) shows clearly that sufficient cross-linking does not take place.

**Table 2**

| | C1164 | T120 | C531 | C944 | T622 | F116 | Hot set | Elongation at break | Elongation at break | Remaining elongation¹ |
|---|---|---|---|---|---|---|---|---|---|---|
| | ppm | ppm | ppm | ppm | ppm | ppm | 90°, 24h [%] | before aging [%] | after 350h [%] | after 350h [%] |
| IE1 | 3000 | -- | -- | -- | -- | -- | 64.9 | 382.9 | 142.0 | 37 |
| IE2 | -- | 3000 | -- | -- | -- | -- | 52.3 | 399.0 | 24.6 | 6 |
| IE3 | -- | -- | 3000 | -- | -- | -- | 49.0 | 408.6 | 91.1 | 22 |
| CE1 | -- | -- | -- | -- | -- | -- | 52.4 | 484.1 | 9.09 | 2 |
| CE2 | -- | -- | -- | 3000 | -- | -- | SP | 378.5 | 405.07 | 107 |
| CE3 | -- | -- | -- | -- | 3000 | -- | SP | 346.0 | 78.7 | 23 |
| CE4 | -- | -- | -- | -- | -- | 3000 | SP | 484.1 | 378.2 | 107 |

| | | | | | | | | | | |
|---|---|---|---|---|---|---|---|---|---|---|
| ¹ Remaining elongation after ageing; Abbreviations: T120 (Tinuvin 120), T622 (Tinuvin 622), C1164 (Cyasorb UV-1164), C531 (Cyasorb 531), C944 (Chimasorb 944), F116 (Flamestab NOR-116), SP = Snap Break | | | | | | | | | | |

## Claims

1. A polyolefin composition comprising
(A) a cross-linkable polyolefin with hydrolysable silane groups;
(B) an acidic silanol condensation catalyst,
wherein the acidic silanol condensation catalyst (B) is present in an amount of 0.0001 to 3 wt.% of the polyolefin composition;
(C) at least one UV stabilizer selected from the group consisting of phenols, benzophenones and/or combinations thereof,
wherein component (C) is present in an amount of 0.0001 to 0.35 wt.% of the polyolefin composition; and/or
(D) at least one UV stabilizer selected from triazines,
wherein component (D) is present in an amount of 0.0001 to 2.0 wt.% of the polyolefin composition.

2. The polyolefin composition according to claim 1,
wherein component (C) is selected from a UV stabilizer
according to formula (I) 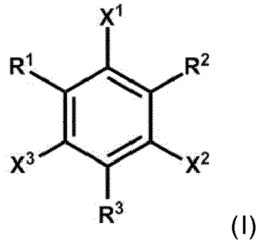
with R¹ and R² being independently the same or different non-substituted or substituted aliphatic or aromatic hydrocarbon residues which independently may comprise hetero atoms,
with R³ being any substituent, and
with X¹, X², and X³ independently being H or OH, with the proviso that at least one of X¹, X² and X³ is OH; and/or
according to formula (II) 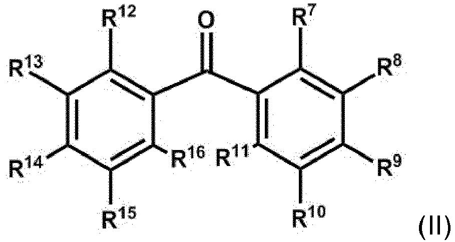 with R⁷ to R¹⁶ being any substituent, preferably R⁷ to R¹⁶ being independently the same or different hetero atoms, substituted or non-substituted hydrocarbon residues, which may comprise hetero atoms, or hydrogen atoms with the proviso that at least one of R⁷ to R¹⁶ is OH, more preferably R⁷ to R¹⁶ being independently the same or different hetero atoms, substituted or non-substituted hydrocarbon residues, which may comprise hetero atoms, or hydrogen atoms with the proviso that at least one of R⁷ to R¹¹ is OH; and/or
wherein component (D) is selected from a UV stabilizer
according to formula (III) 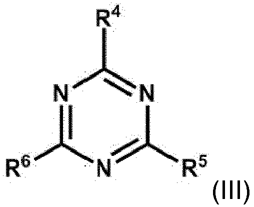 with R⁴ and R⁵ being independently the same or different non-substituted or substituted aliphatic or aromatic hydrocarbon residues which independently may comprise hetero atoms with the proviso that the hetero atoms of at least one of R⁴ and R⁵ are selected from the group consisting of O, P, S, F, CI, Br and/or I, and
with R⁶ being any substituent.

3. The polyolefin composition according to any of the preceding claims further comprising component (E) according to formula (IV) 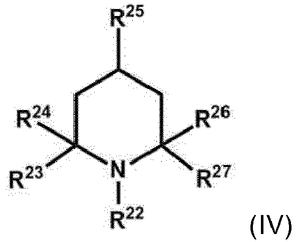
with R²² and R²⁵ being any substituent, and
R²³, R²⁴, R²⁶ and R²⁷ being independently the same or different hydrocarbon residues,
preferably R²² is a hydrogen atom, a hydrocarbon or an alkoxy residue;
wherein component (E) is present in an amount of 0.0001 to 0.1 wt.% of the polyolefin composition.

4. The polyolefin composition according to any of the preceding claims
wherein component (C) is present in an amount of 0.001 to 0.35 wt.%, preferably 0.01 to 0.30 wt.% and more preferably of 0.1 to 0.30 wt.% of the polyolefin composition; and/or
wherein component (D) is present in an amount of 0.001 to 2.0 wt.%, preferably 0.01 to 1.5 wt.% and more preferably of 0.1 to 1.0 wt.% of the polyolefin composition.

5. The polyolefin composition according to any of claims 3 or 4
wherein component (E) is present in an amount of 0.0005 to 0.08 wt.%, preferably 0.001 to 0.06 wt.% and more preferably of 0.005 to 0.04 wt.% of the polyolefin composition.

6. The polyolefin composition according to any of the preceding claims
wherein the acidic silanol condensation catalyst (B) comprises an organic sulfonic acid comprising 10 to 200 C-atoms, the sulfonic acid further comprising at least one aromatic group.

7. The polyolefin composition according to any of the preceding claims
wherein the cross-linkable polyolefin with hydrolysable silane groups (A) comprises a polyethylene with hydrolysable silane groups.

8. The polyolefin composition according to any of the preceding claims
wherein in the cross-linkable polyolefin with hydrolysable silane groups (A) the silane groups are present in an amount of 0.001 to 15 wt.%, preferably 0.01 to 5 wt.%, more preferably 0.1 to 3 wt.% and even more preferably 0.4 to 2.4 wt.% of component (A).

9. The polyolefin composition according to any of the preceding claims
wherein the polyolefin composition further comprises a polyolefin composition with monomer units with polar groups; or
wherein the polyolefin composition further comprises a polyolefin composition with monomer units with polar groups wherein in the polyolefin composition the monomer units with polar groups are present in an amount of 0.1 to 40 wt.%, preferably 1.0 to 35 wt.%, more preferably 2.0 to 25 wt.% and even more preferably 3.0 to 20 wt.%.

10. The polyolefin composition according to claim 9 wherein the cross-linkable polyolefin with hydrolysable silane groups (A) is a terpolymer also containing monomer units with polar groups; and/or
wherein the monomer units with polar groups comprises monomer units with acrylate and/or acetate units.

11. The polyolefin composition according to any of the preceding claims wherein the acidic silanol condensation catalyst (B) comprises an organic sulfonic acid with the structural element:
Ar(SO₃H)ₓ (VII)
with Ar being an aryl group which may be substituted or non-substituted and
x being at least 1; and/or
wherein the acidic silanol condensation catalyst (B) is present in an amount of 0.001 to 2 wt.% and preferably 0.005 to 1 wt.% of the polyolefin composition.

12. The polyolefin composition according to claim 11 wherein in formula (VII) Ar is substituted with at least one C₁ to C₃₀ -hydrocarbyl group, preferably a C₄ to C₃₀-alkyl group.

13. An article comprising a polyolefin composition according to any of claims 1 to 12, preferably the article is a pipe, wire, cable or film.

14. Use of a polyolefin composition according to any of claims 1 to 12 for the production of an article, preferably the article is a film, a layer of a wire or cable.
